(19) Europäisches Patentamt / European Patent Office / Office européen des brevets

(11) **EP 1 891 559 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(51) Int Cl.:
*G06F 17/50* *(2006.01)*     *G06T 17/10* *(2006.01)*

(21) Anmeldenummer: **06754358.7**

(22) Anmeldetag: **14.06.2006**

(86) Internationale Anmeldenummer:
**PCT/EP2006/005714**

(87) Internationale Veröffentlichungsnummer:
**WO 2006/133921 (21.12.2006 Gazette 2006/51)**

(54) **VERFAHREN ZUR DARSTELLUNG FLEXIBLER LÄNGENERSTRECKTER VOLUMENOBJEKTE**

METHOD FOR REPRESENTING FLEXIBLE ELONGATE VOLUME OBJECTS

PROCEDE DE REPRESENTATION D'OBJETS VOLUMIQUES ALLONGES FLEXIBLES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.06.2005 DE 102005028103**

(43) Veröffentlichungstag der Anmeldung:
**27.02.2008 Patentblatt 2008/09**

(73) Patentinhaber: **ESI Software Germany GmbH**
**70565 Stuttgart (DE)**

(72) Erfinder:
• **GOEBBEL, Gernot**
**50931 Köln (DE)**
• **GÖBEL, Martin**
**53277 Bonn (DE)**

(74) Vertreter: **Fritz & Brandenburg**
**Patentanwälte**
**Postfach 45 04 20**
**50879 Köln (DE)**

(56) Entgegenhaltungen:
**DE-A1-102004 050 266**

• HERGENROTHER E ET AL: "Real-time virtual cables based on kinematic simulation" 8TH INTERNATIONAL CONFERENCE IN CENTRAL EUROPE ON COMPUTER GRAPHICS, VISUALIZATION AND INTERACTIVE DIGITAL MEDIA'2000. UNDER THE AUSPICES OF THE LORD MAYOR OF THE CITY OF PILSEN IN COOPERATION WITH EUROGRAPHOCS AND IFIP WG 5.10. WSCG'2000. CONFERENCE, Bd. 2, 2000, Seiten 402-409 vol.2, XP002396321 ISBN: 80-7082-612-6
• NG F M ET AL: "Designing cable harness assemblies in virtual environments" JOURNAL OF MATERIALS PROCESSING TECHNOLOGY ELSEVIER SWITZERLAND, Bd. 107, Nr. 1-3, 22. November 2000 (2000-11-22), Seiten 37-43, XP002396322 ISSN: 0924-0136
• LEON J-C ET AL: "Modelling flexible parts for virtual reality assembly simulations which interact with their environment" SHAPE MODELING AND APPLICATIONS, SMI 2001 INTERNATIONAL CONFERENCE ON. MAY 7-11, 2001, PISCATAWAY, NJ, USA,IEEE, 7. Mai 2001 (2001-05-07), Seiten 335-344, XP010541348 ISBN: 0-7695-0853-7

EP 1 891 559 B1

**Beschreibung**

Die vorliegende Erfindung betrifft ein Verfahren zur Verlegung längenerstreckter, flexibler Volumenobjekte während einer Konstruktion mit Hilfe einer im Wesentlichen physikalisch richtigen, virtuellen Darstellung flexibler längenerstreckter Volumenobjekte, insbesondere Schläuche oder Kabel, gemäß dem Oberbegriff des unabhängigen Anspruches.

Stand der Technik

Die Verlegung von längenerstreckten flexiblen Volumenobjekten, insbesondere Schläuchen oder Kabeln, ist ein wesentliches Element bei der Konstruktion von dreidimensionalen Objekten. Derartige dreidimensionale Objekte können Gebäude, Maschinen, Land-, Luft- oder Wasserfahrzeuge sein.

Die Verlaufsplanung zur Verlegung der genannten längenerstreckten flexiblen Volumenobjekte während der Konzipierungs- und Konstruktionsphase der dreidimensionalen Objekte stellt ein erhebliches Problem dar. Ziel einer Verlaufsplanung ist es neben Weiterem einen optimalen Verlauf der längenerstreckten flexiblen Volumenobjekte unter Einbeziehung der Konstruktionsparameter sowie aller Sicherheitsparameter zu bestimmen. Gleichzeitig sollen die Längen der zu verbauenden längenerstreckten flexiblen Volumenobjekte minimiert werden.

Insbesondere in der Massenproduktion, wie dem Fahrzeugbau, führt eine Minimierung der Längen der zu verbauenden Volumenobjekte zu erheblichen Kostenersparnissen. Soweit das Volumenobjekt fluidführend ist, beispielsweise in Form eines Bremsschlauches, werden durch die Minimierung der Baulänge die Fluidvolumina innerhalb des Volumenobjektes reduziert. Die Reduzierung der Volumina innerhalb des Volumenobjekts wiederum führen zu einer verbesserten Ansteuerung der anzusteuernden Baugruppen.

Bei der Verlaufsplanung sind die Verknüpfungs- und Anschlusspunkte der anzuschließenden Baugruppen zu berücksichtigen, einschließlich der Befestigungspunkte. Unter Befestigungspunkten sind im Sinne der vorliegenden Erfindung die Punkte zu verstehen, bei denen das flexible Volumenobjekt in seinem Verlauf am oder im dreidimensionalen Objekt befestigt wird. Befestigungspunkte dienen der Führung des Verlaufes des flexiblen Volumenobjekts.

Befestigungspunkte können die Freiheitsgrade eines flexiblen Volumenobjektes vollständig oder auch nur in Teilen einschränken.

Weiterhin sind bei der Verlaufsplanung für den Verlauf der flexiblen Volumenobjekte die räumlichen und sterischen Gegebenheiten am oder im dreidimensionalen Objekt zu berücksichtigen, wobei Sicherheitskriterien ebenfalls zu berücksichtigen sind. So müssen Beispielsweise Kabel und Schläuche innerhalb des Motorraums einen hinreichenden Abstand zu heißen, sich bewegenden und/oder Abquetschungen verursachenden Baugruppen aufweisen. Bei durchhängenden Objekten ist gegebenenfalls auch die Wirkung der Schwerkraft mit einzubeziehen.

Die zuvor genannten Aufgaben werden nach dem Stand der Technik mittels bekannter Computer-Aided-Design-Methoden (CAD) teilweise unter Anwendung von FEM (Finite Element Methoden) oder BEM (Boundary Element Methoden) aber auch unter Anwendung von geometrischen Verfahren gelöst. Die Ergebnisse sind jedoch in zweierlei Hinsicht unzureichend. Entweder weisen die bekannten Methoden den Nachteil auf, dass sie nicht den physikalischen Eigenschaften der jeweiligen längenerstreckten flexiblen Objekte Rechnung tragen oder nicht den Anforderungen interaktiver Planungs- und Konstruktionsaufgaben genügen. Dies betrifft insbesondere die jeweiligen elastischen und flexiblen Eigenschaften der einzelnen Objekte. So weichen beispielsweise die kleinstmöglichen Krümmungsradien eines fluidführenden Schlauches deutlich von denen eines ummantelten Kupferkabels ab. Unter kleinstmöglichen Krümmungsradien sind dabei die Krümmungsradien zu verstehen, die gewählt werden dürfen, ohne zu Funktionsstörungen zu führen.

Hinzu tritt, dass auch bei längenerstreckten flexiblen Objekten gleicher Art, wie beispielsweise Schläuchen, in Abhängigkeit der jeweiligen Parameter, wie Außen- und Innendurchmesser, ausgewähltes Material und anderes, sich deren Eigenschaften unterscheiden. Letzteres wiederum muss bei der Planung für den Verlauf der flexiblen Volumenobjekte berücksichtig werden.

Der grundsätzliche Ansatz bei der Verwendung der FEM zur Darstellung von Körpereigenschaften besteht in der Reduzierung der Darstellung der Eigenschaften der diskretisierten Elemente, wobei die Gesamtdarstellung des Körpers die funktionelle Summe aller Einzeldarstellungen bildet. Wichtig hierfür ist die Erfüllung der Stetigkeitsbedingungen beim Übergang zwischen den einzelnen Elementen.

Grundsätzlich gilt für den Ansatz mittels FEM, dass die Darstellung umso exakter wird, je größer der Diskretisierungsgrad des darzustellenden Körpers ist. Mit zunehmender Anzahl der Elemente nähert sich die Darstellung den physikalisch korrekten Eigenschaften des darzustellenden Körpers an.

Umgekehrt führt die Erhöhung der Anzahl der Elemente zu einem überproportionalen Ansteigen des Rechenaufwandes zur Darstellung der Körpereigenschaften. Mit Erhöhung des Rechenaufwandes geht ein erhöhter Zeitbedarf einher. Letzteres hat zur Folge, dass die Ergebnisse zur Darstellung der Körpereigenschaften mit großer zeitlicher Verzögerung zur Verfügung gestellt werden. Eine Darstellung in Echtzeit ist somit nicht möglich.

Hintergrund für Letzteres ist die Tatsache, dass jedes Element eine erhebliche Anzahl von Freiheitsgraden aufweist. Bei jeder Änderung der räumlichen Lage des Objektes, d.h. des längenerstreckten flexiblen Volumenobjektes, im virtuellen Modell müssen daher eine Vielzahl von Parametern neu berechnet werden, wobei die jeweiligen Wechselwirkungen unter den einzelnen Elementen zu berücksichtigen sind.

Ebenso ist die Anwendung der FEM Verfahren bekannt, die in einem Vorverarbeitungsschritt den vollständigen Lösungsraum für ein längenerstrecktes Volumenobjekt bei fest definierter Benutzertätigkeit in einem zeitaufwendigen Rechenschritt ermittelt (Preprocessing) und diesen zu einen späteren Zeitpunkt visuell darstellt (Postprocessing). Bei diesem bekannten Verfahren wird für das längenerstreckte Volumenobjekt die Lage und der Verlauf über dessen gesamte Längenerstreckung berechnet. Dabei wird jeweils von einer exakten Vorgabe ausgegangen. Das bedeutet, dass für jede Veränderung ein vollständiger und damit zeitaufwendiger Berechnungsablauf durchgeführt werden muss, wobei der gesamte Verlauf des längenerstreckten Volumenobjektes bestimmt, bzw. berechnet wird. Anders ausgedrückt bedeutet dies beispielsweise, dass wenn der Bediener den optimierten Verlauf des längenerstreckten flexiblen Volumenobjektes in dem dreidimensionalen Objekt, z.B. einem Motorraum, interaktiv optimieren möchte, so ist für jede einzelne Verlaufsvariante eine vollständige Berechnung im Wege des Preprocessing durchzuführen und für die visuelle Darstellung abzulegen. Dabei ist der Bediener dann letztlich auf die in der Vorauswahl festgelegten Verläufe des längenerstreckten Volumenobjektes festgelegt. Er bewegt sich somit in einem groben Auswahlraster. Um in diesem Beispiel zu bleiben, kann der Bediener bei zehn Preprocessing-Schritten, bei dem zehn mögliche Verläufe des flexiblen längenerstreckten Volumenobjektes mittels der bekannten FEM berechnet werden, in der visualisierten Darstellung nur die genannten und vorberechneten zehn Verlaufsvarianten einsetzen. Jede weitere, auch nur geringfügige, Änderung des Verlaufes bedarf einer vollständigen Neuberechnung des Verlaufes des längenerstreckten Volumenobjektes.

Der Nachteil liegt auf der Hand: Eine Änderung der Form des längenerstreckten Volumenelementes, z.B. Durchmesser, wie auch seiner Eigenschaften, z.B. Elastizität und Materialzusammensetzung, oder eine veränderte interaktive Herangehensweise des Benutzers erfordert es jeweils, diesen aufwendigen Vorverarbeitungsschritt erneut durchzuführen. Weiterhin ist der Bediener auf das grobe Raster der im Preprocessing vorgegebenen Verläufe des flexiblen Volumenobjektes festgelegt. Er kann sich nur in einem groben Raster bewegen.

Die Nachteile der bekannten CAD-Methoden werden im Weiteren anhand eines Beispiels aus dem Automobilbau erläutert. Mit den bekannten CAD-Methoden wird ein virtuelles Modell des zu konstruierenden Fahrzeugs erstellt. Dabei werden, beispielsweise für den Motorraum die ersten Grobplanungen für den Verlauf der hierin anzubringenden längenerstreckten flexiblen Volumenobjekte gemacht. Die genannte Grobplanung ist jedoch nicht hinreichend zur Optimierung.

Zur Optimierung der Verlaufsplanung der längenerstreckten Volumenobjekte wird anschließend ein reales Model anhand des virtuellen Modells gefertigt. Anhand des realen Models wiederum werden durch den Konstrukteur händisch die längenerstreckten flexiblen Volumenobjekte eingepasst. Diese Vorgehensweise ist zeit- sowie kostenintensiv.

Von Ng, F. M. et al. ist eine virtuelle Kabelnetzwerkplanung bekannt ('Designing cable harness assemblies in virtual environments' Journal of Materials Processing Technology, vol. 107, No. 1-3, 2000-11-22, p. 37 - 43). Hierbei wird im Wesentlichen auf den Raumbedarf und die möglichst effektive Anordnung der Kabel abgestellt. In diesem Dokument wird nachteilig die physikalische Biegsamkeit und Elastizität der Kabel nicht berücksichtigt, sodass sich die virtuell konzipierten Kabelführungen als praktisch nicht machbar herausstellen können.

Ausgehend von solch groben Modellen schlägt der Stand der Technik verschiedene Methoden vor, welche bei der virtuellen Planung von Kabelverläufen physikalische Eigenschaften mit berücksichtigen:

Von Hergenrother et al. ('Real-time virtual cables based on kinematic simulation' 8th international conference in central europe on computer graphics, visualisation and interactive, digital media' 2000, under the auspices of the lord mayor of the city of pilsen in cooperation with Eurographics and IFIP WG 5. 10. WSCG'2000. Conference, vol. 2, 2000, p. 402-409) ist die Verwendung kinematischer Ketten zur Simulation von Kabeln bekannt. Gemäß Hergenrother bedarf es dabei für ein virtuelles Kabel mit 16 Balken für eine vollständige, mathematische Lösung einer Rechenzeit um 200 ms. Hier wird jedoch eine hinreichende Übereinstimmung von virtuellem Modell und realem Verhalten, welche eine direkte Übertragung in ein reales Verfahren zur Verlegung erlauben würde, nicht diskutiert. Obwohl die technischen Anforderungen an die bereitzustellende Hardware ob großer Datensätze bereits beträchtlich ist, wird eine passende Genauigkeit so nicht erreicht. Nach Leon et al. (Modelling flexible parts for virtual reality assembly simulations which interact with their environment', shape modelling and applications, SMI 2001 international conference, may 7-11, piscataway, NJ, USA, IEEE, (2001-05-07), p. 335 - 344) können FEM in Kombination mit Balkennetzwerken verwendet werden. Reine FEM-Simulationen benötigen 1 bis 15 Minuten für eine Lösung, während Balkennetzwerke 0,2 bis 0,4 Sekunden benötigen. In beiden Fällen sind auch hier die Datensätze groß und die Anforderungen an die erforderliche Hardware beträchtlich. Auch hier wird eine direkte Übertragbarkeit einer im Wesentlichen mit der Realität übereinstimmenden, virtuellen Verlegung nicht angedacht.

AUFGABE DER ERFINDUNG

Aufgabe der vorliegenden Erfindung ist es, die Nachteile des Standes der Technik zu überwinden und ein Verfahren zur Verlegung von längenerstreckten Volumenobjekten anzubieten, bei dem eine physikalisch im Wesentlichen korrekte, virtuelle Darstellung von flexiblen, längenerstreckten Volumenobjekten bereitgestellt wird, welche eine Bestimmung und Darstellung von Werten einer räumlichen Lage der längenerstreckten Volumenobjekte in Echtzeit ermöglicht, in Abhängigkeit der jeweiligen Anforderungen eine Geschwindigkeits- und/oder Genauigkeitsoptimierung bei der Darstellung zulässt und eine freie Interaktion eines Bedieners mit der virtuellen Darstellung ermöglicht.

BESCHREIBUNG DER ERFINDUNG

Gelöst werden die Aufgaben nach den technischen Merkmalen des unabhängigen Anspruches.

Die vorliegende Erfindung stellt ein für ein Verfahren zur Verlegung geeignetes Verfahren zur physikalisch im Wesentlichen korrekten Darstellung von flexiblen längenerstreckten Volumenobjekten in einem virtuellen Modell bereit. Das erfindungsgemäße Verfahren zur Darstellung lässt sich grundsätzlich in vier Verfahrensschritte unterteilen. Diese Unterteilung dient jedoch nur der besseren Darstellung der Erläuterung des Verfahrens zur Darstellung.

Im ersten Verfahrensschritt wird das darzustellende flexible Volumenobjekt in Einzelabschnitte zerlegt. Jeder der genannten Einzelabschnitte beginnt und endet mit einem als Handle bezeichneten Interaktionspunkt. Ein Interaktionspunkt verfügt über sechs Freiheitsgrade und lässt sich im dreidimensionalen Raum fixieren oder in diesen Freiheitsgraden durch einen interaktiven Benutzer manipulieren. Fixierte Interaktionspunkte werden auch als Befestigungspunkte bezeichnet. Ist beispielsweise das flexible längenerstreckte Volumenobjekt ein Schlauch, der in zehn Abschnitte zerlegt wird, so weist dieser Schlauch elf Handles auf. Diese Interaktionspunkte werden zur virtuellen Verlegung und die dadurch verursachte Deformation der längenerstreckten Volumenelemente herangezogen. Die Anzahl der Interaktionspunkte ist beliebig und kann in allen Verfahrensschritten durch Hinzufügen oder Löschen verändert werden.

Der erste Verfahrensschritt führt zu erheblichen Vorteilen gegenüber den zuvor beschriebenen herkömmlichen FEM-Verfahren. Während bei den herkömmlichen FEM-Verfahren das längenerstreckte flexible Volumenobjekt in bekannter Weise in eine Vielzahl von stetigen Polyedern zerlegt und diese dann berechnet, bzw. ihre Änderungen berechnet werden, so ist die Anzahl der zu bestimmenden und erfindungsgemäß verwendeten Interaktionspunkte dramatisch reduziert.

Im zweiten Schritt des erfindungsgemäßen Verfahrens werden die physikalischen Eigenschaften der Abschnitte zwischen jeweils zwei Handles bestimmt. Erfindungsgemäß erfolgt die Bestimmung der physikalischen Eigenschaften durch experimentelle Vorbestimmung der Eigenschaften des zu bestimmenden flexiblen Objektes oder eines hinreichend ähnlichen Objektes mit nachfolgender multidimensionaler Tabellierung.

In Schritt drei des erfindungsgemäßen Verfahrens werden die im zweiten Schritt gewonnenen diskreten, d.h. experimentellen, Daten interpoliert, um die Form und den Verlauf des längenerstreckten Volumenobjektes für das gesamte Objekt zu bestimmen und damit eine kontinuierliche Form- und Verlaufsänderung des Objektes für die sich im vierten Schritt anschließende Visualisierung und Bedienerinteraktion zu gewährleisten.

Im vierten Schritt erfolgt die Zusammenführung der physikalischen Daten der Einzelabschnitte, die in Schritt zwei und drei bestimmt wurden und es schließt sich die Visualisierung an.

Das erfindungsgemäße Verfahren zeichnet sich durch eine einfache Handhabung sowie dadurch aus, dass der Bediener den Verlauf des flexiblen längenerstreckten Volumenobjektes unter der Maßgabe der Handles frei ändern kann, wobei die physikalische korrekte Darstellung unmittelbar erfolgt. Ein interaktives Vorgehen bei der Planung der Verlegung von flexiblen längenerstreckten Volumenobjekten mit freier Wahl der Handles wird damit erstmals möglich.

Im ersten Schritt des erfindungsgemäßen Verfahrens wird, wie oben beschrieben, das darzustellende flexible längenerstreckte Volumenobjekt mit Handles versehen. Die Anzahl und Positionierung der Handles ist grundsätzlich nicht beschränkt und kann beispielsweise in Abhängigkeit des darzustellenden flexiblen Objektes selbst oder der gewählten Umgebung gewählt werden. Auch ist der Bediener frei, die Gegebenheiten des dreidimensionalen Objektes zu berücksichtigen, in welchem das längenerstreckte flexible Volumenobjekt dargestellt werden soll. Beispielsweise sind bei einem darzustellenden Kabel in einem Motorraum mit zwei Befestigungspunkten wenigstens vier Handles vorzusehen. Jeweils ein Handle für die Enden des Kabels sowie jeweils ein Handle für jeden Befestigungspunkt.

Der Bediener ist jetzt befähigt die Lage der Handles frei zu wählen, in Abhängigkeit der Gegebenheiten des dreidimensionalen Objektes sowie in den folgenden Verfahrensschritten frei in ihren 6 Freiheitsgraden zu bewegen. Um bei dem zuvor genannten Beispiel zu bleiben, kann er die Lage der Befestigungspunkte des Kabels im virtuellen Motorraum, der mit bekannten Methoden erzeugt wurde, frei wählen. Dabei wird dem Bediener durch die in Echtzeit erfolgende Darstellung aus der Stufe vier des Verfahrens gezeigt, ob der von ihm vorgesehene Verlauf des Kabels geeignet ist. Umgekehrt kann der Bediener sofort erkennen, ob das Kabel, um bei diesem Beispiel weiterhin zu bleiben, Aggregaten im Motorraum zu nahe kommt oder über Knickkanten verläuft. Grundsätzlich ist der physikalisch richtige Verlauf eines derartigen flexiblen längenerstreckten Volumenobjektes von dem theoretischen Idealverlauf unterschiedlich. Hierbei sind nämlich die physikalischen Eigenschaften des realen Objektes mit zu berücksichtigen, wie zum Beispiel das Durchhängen unter Schwerkraft oder die Biegesteifigkeit des betreffenden längenerstreckten Volumenelementes.

Aufgrund der physikalisch richtigen Darstellung des flexiblen längenerstreckten Volumenobjektes in Echtzeit ist der Bediener in der Lage, unmittelbare Korrekturen durchzuführen und den optimalen Verlauf des flexiblen längenerstreckten Volumenobjektes in dem dreidimensionalen Raum, in dem es angeordnet werden soll, zu optimieren.

Weiterhin zeigte sich, dass die gemäß dem zweiten Verfahrensschritt bestimmten Eigenschaften der Teilabschnitte in den Verfahrensabschnitten Drei und Vier zu einer physikalisch richtigen Darstellung zusammengefügt werden können.

In dem zweiten Verfahrensschritt werden in einem ersten Unterschritt Datensätze bestimmt und in einem zweiten Unterschritt in einer Tabelle bereitgestellt. Diese Datensätze geben das physikalisch richtige Verhalten des längenerstreckten Volumenobjektes in den Teilabschnitten wieder. Die Bestimmung der Datensätze erfolgt anhand realer längenerstreckter Volumenobjekte. Die Bestimmung der Datensätze im ersten Unterschritt des zweiten Verfahrensschrittes kann bei der Durchführung des erfindungsgemäßen Verfahrens zeitlich auch vor dem ersten Verfahrensschritt liegen.

Der Unterverfahrensschritt der Bestimmung der Daten für diese Tabelle wird nachfolgend anhand des Beispiels eines Kabels beschrieben. Es gilt jedoch für alle längenerstreckte flexible Volumenobjekte.

Der jeweilige Kurvenverlauf des Kabels wird anhand eines realen Kabels bestimmt. Dies kann beispielsweise durch Auflegen auf einen Untergrund geschehen, der mit einer standardisierten Rasterung versehen ist. Eine geeignete Rasterung ist z.B. eine Millimeterrasterung. Anschließend wird der Verlauf des Mittelpunktes des Kabels auf dem Raster bestimmt. Geeigneter Weise mittels einer Digitalaufnahme und anschließender Computerisierung. Derartige Verfahren sind bekannt.

Aus den so gewonnenen Punkten, liegend auf der Mittellinie des Kabels ergibt sich zwangsläufig der Verlauf dieser Mittellinie.

Im Weiteren werden derartige Datensätze unter definierten Krümmungsradien des realen Kabels sowie der Bestimmung der Endpunkte des vermessenen Kabelabschnitts bestimmt und in die Tabelle aufgenommen. Die zuvor genannten Datensätze betreffen den zweidimensionalen Verlauf des Kabels auf einem glatten Untergrund. Dementsprechend sind weitere Daten für den dreidimensionalen Verlauf des Kabels aufzunehmen. Hierbei werden in entsprechender Weise die XYZ der Koordinaten der Punkte auf dem jeweiligen Kabel gemessen. Derartige Verfahren sind ebenfalls bekannt. Weitere, ebenfalls bekannte Verfahren zur experimentellen Bestimmung dieser Datensätze können den Einsatz getrackter Marker erfordern oder aus bildgebenden Verfahren im 3-dimensionalen Raum rekonstruiert werden.

Aus den so gewonnenen, gemessenen Daten ergibt sich jeweils ein dreiteiliger Datensatz für jeden Punkt in der XY-Koordinate, XZ-Koordinate sowie YZ-Koordinate, welche in der Tabelle abgelegt werden. Aus der Summe der jeweiligen Meßpunkte des Mittelpunktes des Kabels ergibt sich der dreidimensionale Verlauf des Kabels.

In Abhängigkeit des Anwendungszweckes, d.h. der Anordnung in dem dreidimensionalen Objekt ist gegebenenfalls der Einfluss der Schwerkraft zu berücksichtigen. So führt ein langer Abschnitt zwischen zwei Befestigungspunkten innerhalb des dreidimensionalen Objektes bei biegeschlaffen Bauteilen zu einem Durchhängen und damit zu einer Verlängerung der realen Wegstrecke zwischen den Anschlusspunkten.

DETAILLIERTE ERLÄUTERUNG AN HAND VON AUSFÜHRUNGSBEISPIELEN

Dieser zweite Schritt des erfindungsgemäßen Verfahrens wird im Folgenden anhand der Ausführungsbeispiele unter Bezugnahme auf die Figuren weiter erläutert.

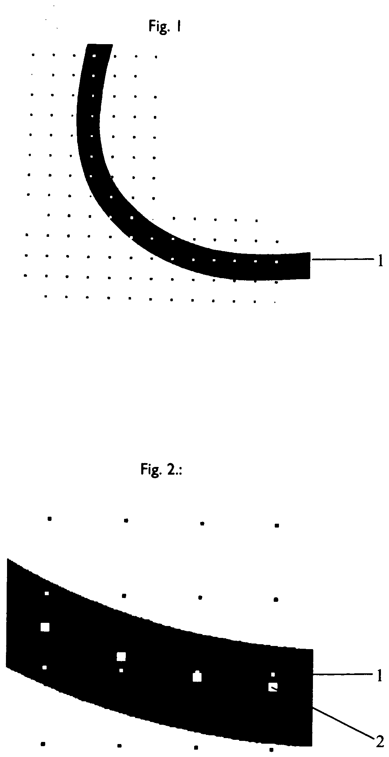

Fig. 1 zeigt einen realen Schlauch 1 zur Bestimmung der Parameter gemäß dem zweiten Verfahrensschritt. Darauf ist ein Normraster projiziert, anhand dessen die jeweilige Mittellage des Schlauches bestimmt wird. Das jeweilige Ende des Rasters zu Beginn und zu Ende des Schlauches stellen gleichzeitig die Enden des jeweiligen Teilabschnittes dar, an dem die Daten gewonnen werden.

Fig. 2 ist eine Detailvergrößerung der Fig. 1. Es zeigt den Schlauch 1 aufgelegt auf einem Normraster, hier im Millimetermaßstab, wobei die Zentimetermarken als schwarze, bzw. weiße Punkte hervorgehoben sind. Auf dem Schlauch 1 sind die im nachfolgenden Verfahrensschritt Drei berechneten Mittelpunkte des jeweiligen Schlauchstückes mit Quadraten 2 dargestellt.

Die so gewonnenen, gemessenen Daten eines realen dreidimensionalen Volumenobjektes stehen dann zur weiteren Bearbeitung in Verfahrensschritt Drei zur Verfügung. Die gewonnenen realen Daten korrelieren nur insofern mit dem darzustellenden flexiblen längenerstreckten Volumenobjekt, dass es sich bei dem realen Objekt um ein Objekt mit im Wesentlichen gleichen physikalischen Eigenschaften handelt. Sowohl die jeweils vermessenen Krümmungsradien und -verläufe, als auch die zur Vermessung angelegten Abschnitte des realen Objektes entsprechen nicht mit den Abschnitten zwischen zwei Handles gemäß des erfindungsgemäßen Verfahrens. Auch besteht keine unmittelbare Entsprechung zwischen den Daten des gemessenen realen Kurvenverlaufes sowie des erfindungsgemäß zu bestimmenden Kurvenverlaufes. Die in dem Verfahrensschritt zwei am realen Objekt gewonnenen Daten dienen ausschließlich als Basisdatensatz für die weitere Verarbeitung in den Schritten Drei und Vier.

Im dritten Verfahrensschritt werden die experimentell gewonnenen Werte interpoliert, um eine kontinuierliche Form- und Verlaufsänderung des längenerstreckten Volumenelementes für die Visualisierung und Bedienerinterkation zu gewährleisten.

Die Interpolation wird durch geeignetes Fitting der experimentellen Werte mit einer definierten Modellfunktionen durchgeführt.

Die Modellfunktion, welche die physikalisch richtige Form des längenerstreckten flexiblen Volumenobjektes beschreibt, ist eine Funktion $\vec{r}(t)$,
definiert durch Formel (1):

$$\vec{r}(t) = \sum_i c_i \vec{r}_i(t) \tag{1}$$

wonach $c_i$. Koeffizienten sind, die durch eine benutzerdefinierte Manipulation der

Handles definiert sind, und $\vec{r}_i(t)$ Teilergebnisse der linearen Differenzialgleichung sind gemäß Formel (2):

$$B\vec{r}^{IV} - M\vec{n} \times \vec{r}^{III} - T\vec{r}'' = \mu\vec{g} \tag{2}$$

Die Parameter der Formeln sind dabei wie folgt:

$B$ - Biegestelfigkeit
$M$ - Torsionsmoment
$\vec{n}$ - Normalen vektor, welcher vom Anfang bis zum Ende des längenerstreckten flexiblen Volumenobjektes zeigt
$T$ - Spannungskraft
$\mu$ - lineare Dichte, oder Masse pro Längeneinheit
$\vec{g}$ - Schwerkraftvektor

Es zeigte sich, dass eine richtige physikalische Darstellung von längenerstreckten flexiblen Volumenobjekten auf der Basis der gefundenen Modellfunktionen möglich ist, wie es im unten aufgeführten Vergleich der experimentellen Daten mit den Interpolationswerten dargestellt wird. Der Fehler zwischen dem experimentellen Verlauf eines längenerstreckten Volumenobjektes und dem hier beschriebenen Verfahren liegt unterhalb von 2%.

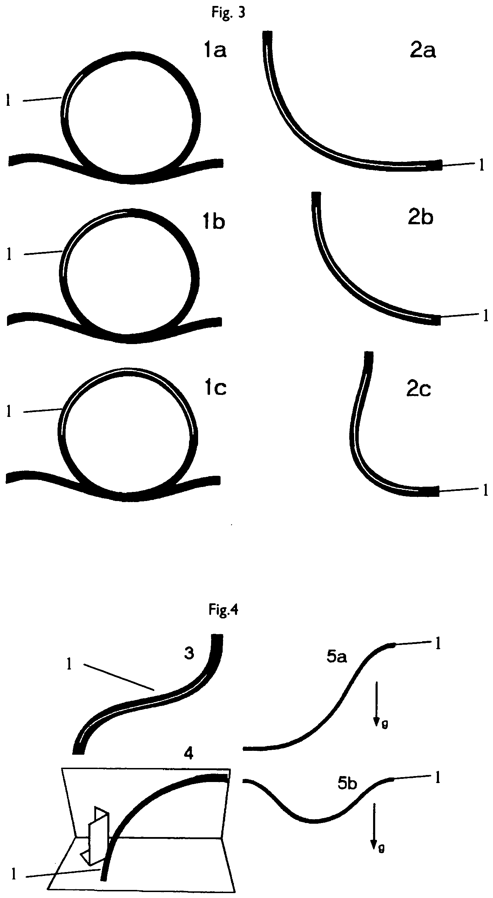

Die Fig. 3 und Fig. 4 zeigen beispielhaft die dazugehörigen Experimente 1 bis 5 . Dabei ist jeweils eine Fotographie des Schlauches 1 in unterschiedlichen Lagen ersichtlich. Darauf projiziert ist die mit dem erfindungsgemäßen Verfahren gewonnene Verlaufslinie 3 gemäß der Berechnung nach dem dritten Verfahrensschritt für jeweils einen Abschnitt zwischen zwei Handles. Letztere sind nicht dargestellt.

Die Experimente 1a , b sowie c in Fig. 3 betreffen einen kreisförmigen Verlauf des Schlauches. Die Experimente 2a , b sowie c betreffen einen einfachen Kurvenverlauf mit unterschiedlichen Ausgestaltungen. Experiment 3 der Fig. 4 zeigt einen S-förmigen Kurvenverlauf des Schlauches mit draufprojiziertem Verlauf gemäß der Berechnung nach dem erfindungsgemäßen Verfahren. Die Projektion ist als weißer Strich erkenntlich.

Die Experimente 4 sowie 5a und 5b in Fig. 4 zeigen einen dreidimensionalen Verlauf des Schlauches 1 , wobei in den Experimenten 5a und 5b beispielhaft als weitere Komponente die Schwerkraft auf den Schlauch einwirkt. Dargestellt als nach unten gerichteter Pfeil mit der Kennzeichnung g.

Bei der Manipulation der Handles durch den Bediener werden die in der Tabelle abgelegten Werte für die Teilabschnitte zwischen den Handles entnommen, entsprechend der Lage der Handles ausgewählt, interpoliert und zusammengefügt, was im vierten Verfahrensschritt durchgeführt wird. Abschließend erfolgt im vierten Verfahrensschritt ebenso die Visualisierung.

Der Vorteil des erfindungsgemäßen Verfahrens gegenüber dem Stand der Technik zeigt sich darin, dass während der Manipulation durch den Bediener das Ergebnis unmittelbar, d.h. in Echtzeit darstellbar ist. Bei einer Berechnung des vollständigen Verlaufes eines längenerstreckten flexiblen Volumenobjektes mittels FEM in herkömmlicher Weise bedarf es einer Rechenzeit von mehreren Minuten bis hin zu Stunden bis das Ergebnis der Manipulation visualisierbar ist. Weiterhin zeigt sich, dass der Bediener bei der Auswahl der Verlaufsführung des zu bestimmenden flexiblen längenerstreckten Volumenobjektes nicht an ein Raster gebunden ist, wie es bei den klassischen FEM-Verfahren der Fall ist, wobei dieses Raster durch Auswahl der Preprocessing-Schritte gebildet wird.

Die Verwendung der experimentell bestätigten Modellfunktion beim erfindungsgemäßen Verfahren erlaubt somit also die Berechnung der Verformungen von längenerstreckten flexiblen Volumenobjekten in Echtzeit.

Wie bereits ausgeführt werden im nachfolgenden Schritt vier die Ergebnisse für die Darstellung des längenerstreckten flexiblen Volumenobjektes zusammengeführt und in an sich bekannter Weise visualisiert. Diese Visualisierung kann beispielsweise in Form einer Bildschirmdarstellung oder einer dreidimensionalen Projektion geschehen. Die Manipulation der Handles durch den Bediener ist mit beliebigen Interaktionsgeräten möglich.

Im Schritt drei des erfindungsgemäßen Verfahrens wird ausschließlich die physikalisch richtige Mittellinie des zu bestimmenden Volumenobjektes bestimmt. Zur visuellen Darstellung kann das Volumen des Volumenobjektes um die Mittellinie mittels einfacher und bekannter Darstellungsmethoden hinzugefügt werden. Dieser Verfahrensschritt ist grundsätzlich nicht notwendig, jedoch vorteilhaft, da es dem Bediener eine visuelle Darstellung zeigt, die einem realen Bild entspricht. Letzteres wird von dem Bediener in der Regel als vorteilhaft empfunden.

Vergleich experimentell gewonnener Daten gegenüber Daten gewonnen nach dem erfindungsgemäßen Verfahren:

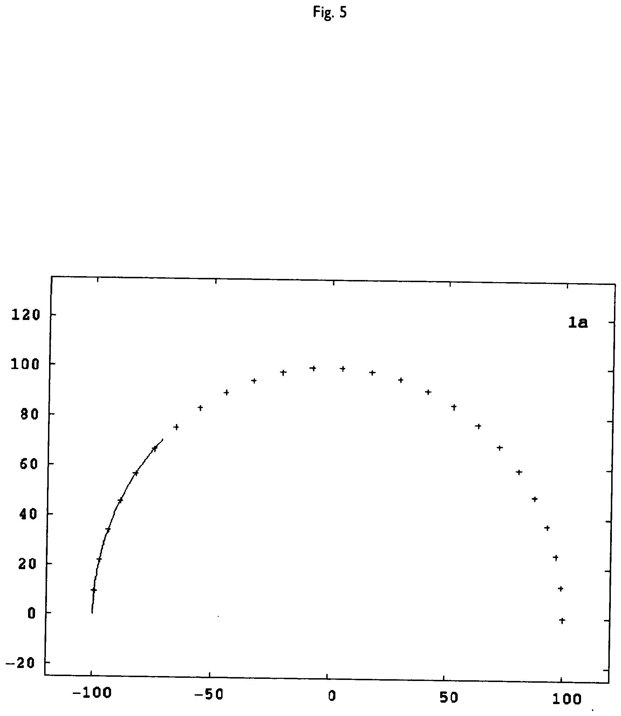

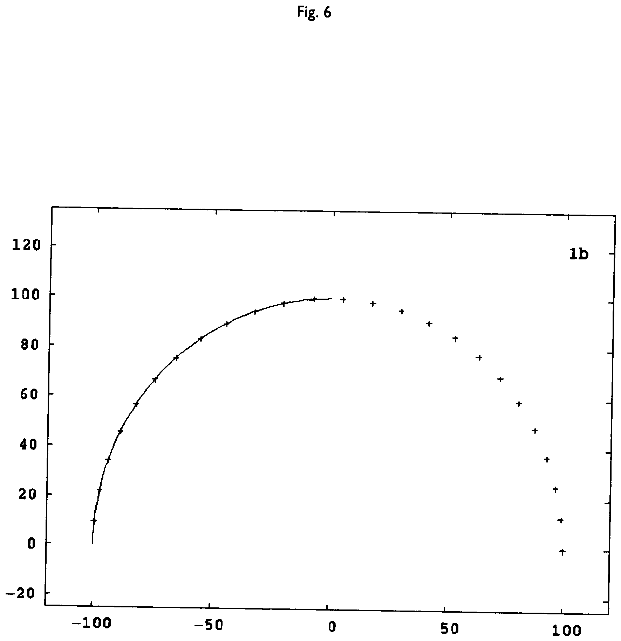

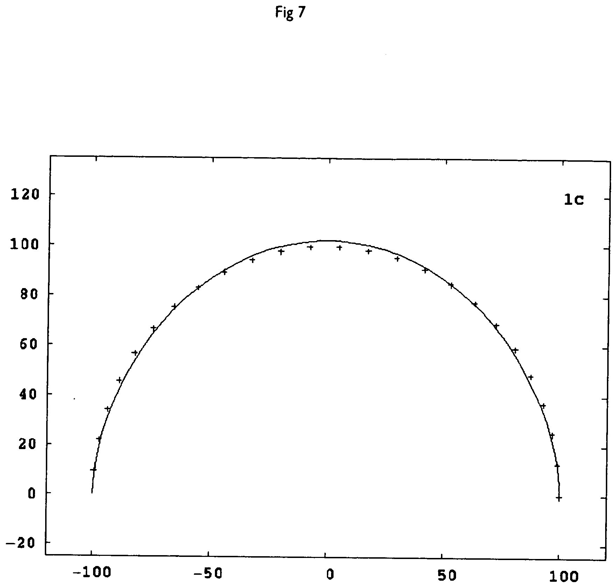

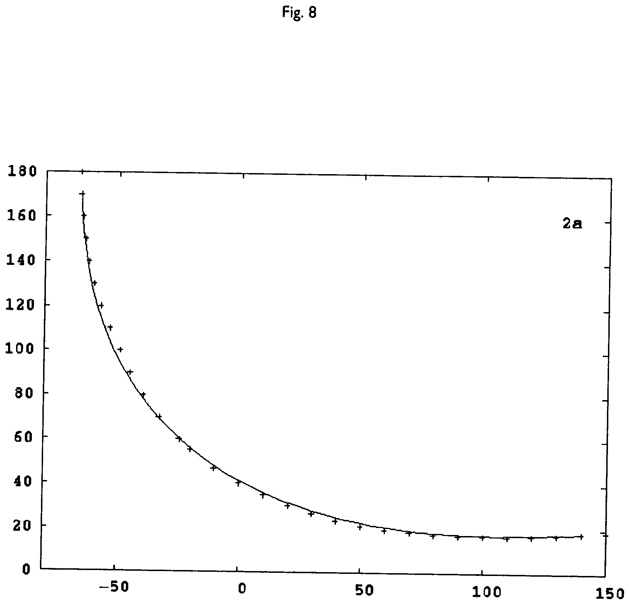

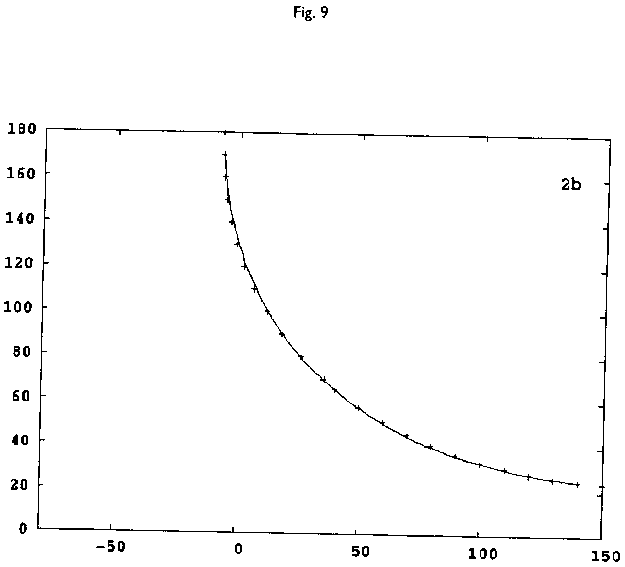

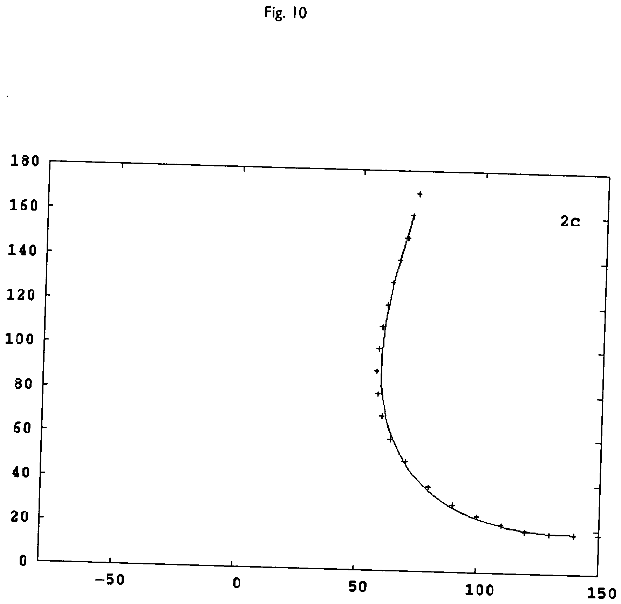

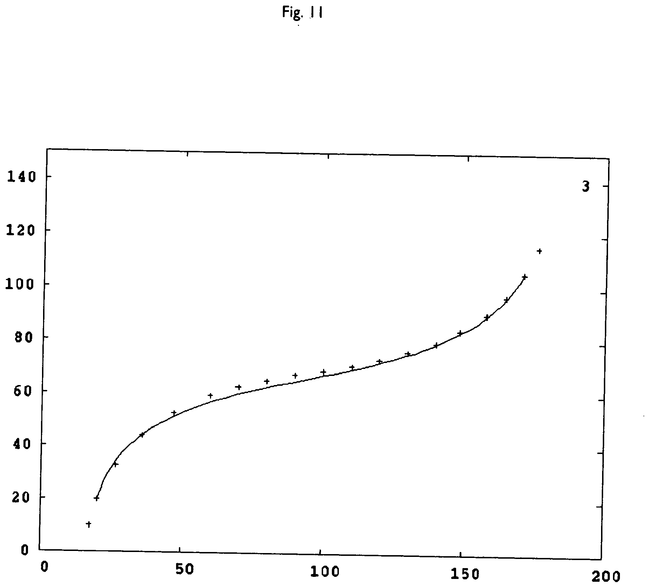

Die Fig. 5 bis Fig. 14 stellen die experimentell gemessenen Daten eines Verlaufes eines längenerstreckten Volumenobjektes den Daten gegenüber, die mit dem erfindungsgemäßen Verfahren erzeugt wurden. Die Fig. 5, Fig. 6 sowie Fig. 7 entsprechen den Experimenten 1a , 1b sowie 1c in Fig. 1. In den Fig. 5, Fig. 6 und Fig. 7 sind dabei die oberen Halbkreise des Schlauchverlaufes dargestellt. Als Kreuze sind die experimentell gemessenen Werte dargestellt. Die mit dem erfindungsgemäßen Verfahren gewonnenen Daten sind als Karos dargestellt. Der Auftrag als Abzisse und Ordinate ist jeweils in mm.

Die Darstellung zeigt deutlich die Übereinstimmung der Daten, die mit dem erfindungsgemäßen Verfahren gewonnen wurden gegenüber den Daten, die experimentell gemessen wurden.

Die Fig. 8, Fig. 9 sowie Fig. 10 entsprechend den Experimenten 2a , 2b sowie 2c der Fig. 3. Es ist jeweils der identische vollständige Verlauf mit experimentellen Daten (Kästchen) sowie Daten gewonnen nach dem erfindungsgemäßen Verfahren (Kreuze) gezeigt.

Fig. 11 zeigt experimentelle Messdaten Gegenüberstellung der mit dem erfindungsgemäßen Verfahren gewonnenen Daten eines Verlaufes eines Schlauches gemäß Experiment 3 in Fig. 4 mit zwei-dimensionaler Darstellung.

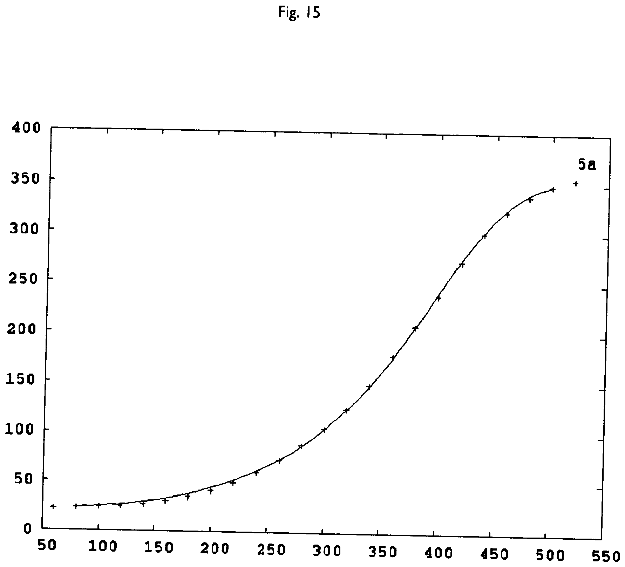

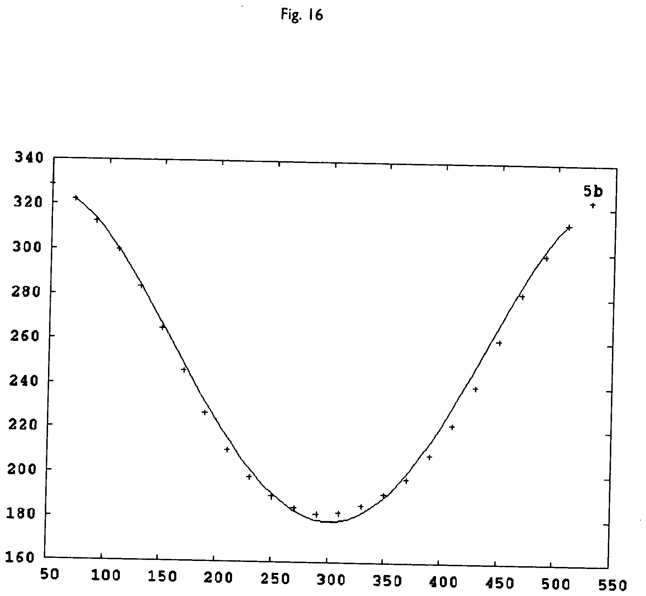

In entsprechender Weise korrelieren die Fig. 15 und Fig. 16 mit den Experimenten 5a sowie 5b der Fig. 4. Bei dem zweidimensionalen Verlauf des Schlauches 1 wurde hier ebenfalls der Schwerkraftvektor g berücksichtigt.

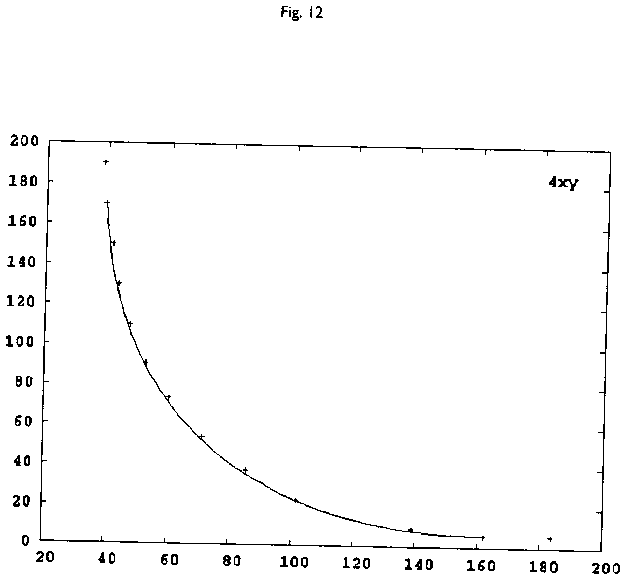

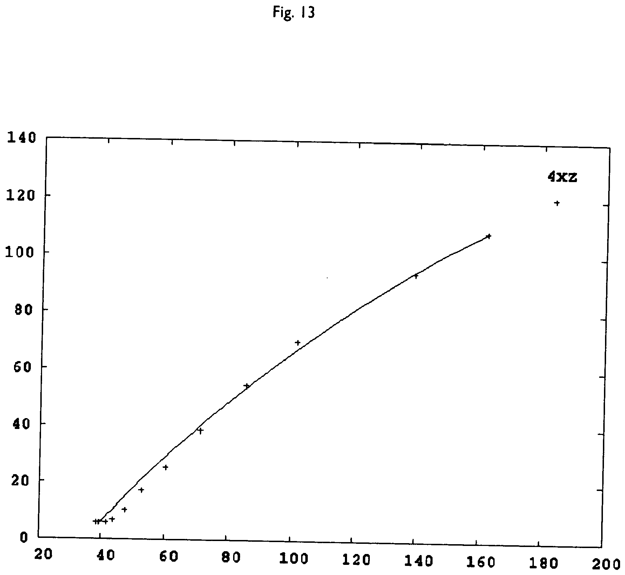

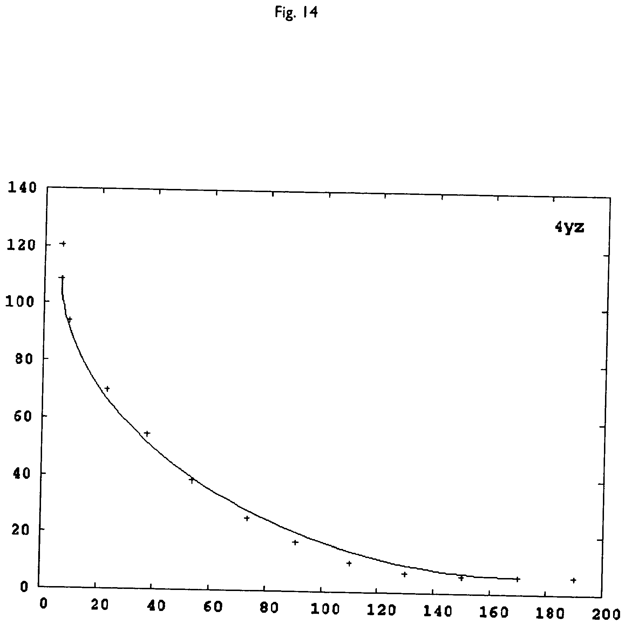

Die Fig. 12, Fig. 13 und Fig. 14 korrelieren mit dem Experiment 4 der Fig. 4. Das Experiment 4 der Fig. 4 ist eine dreidimensionale Darstellung eines Kurvenverlaufes eines Schlauches. Fig. 12 zeigt die Gegenüberstellung experimenteller Daten sowie nach dem erfindungsgemäßen Verfahren gewonnene Daten in xy-Ebene, Fig. 13 in xz-Ebene sowie Fig. 14 in yz-Ebene.

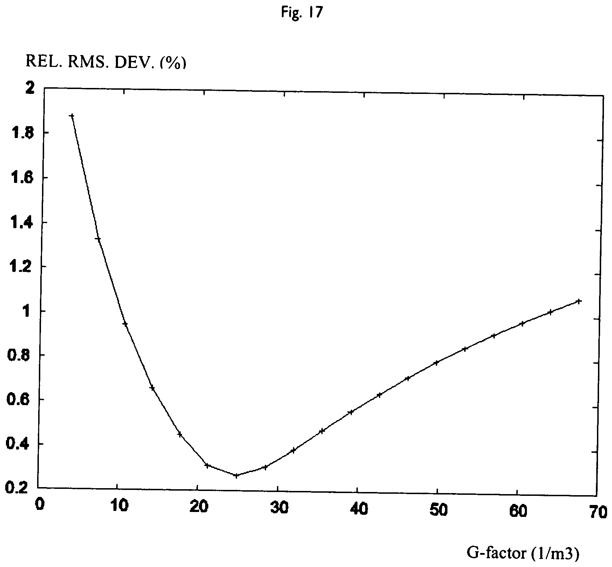

Die Bestimmung des Faktors $G = \mu g/B$ für die Anwendung des Schwerkraftvektors wird in Fig. 17 veranschaulicht mit Bezug auf Experiment 5a der Fig. 2. Zur Bestimmung dieses Faktors wurde der Kabelverlauf des Experiments 5a mit unterschiedlichen Werten von G (0 - 70 $m^{-3}$) rekonstruiert und mit dem experimentell gefundenen Kabelverlauf verglichen. Es zeigt sich, dass für das verwendete Kabel die Wurzel der mittleren Abweichungen (r.m.s) relativ mit 0,3% bei G = 25$m^{-3}$ die geringste Abweichung erzielt, womit dieser Wert für den G-Faktor festgelegt wurde und in dem o.a. Vergleich der Fig. 15 und Fig. 16 für die Experimente 5a und 5b angewandt wurde.

Tabelle 1 fasst die gewonnenen Erkenntnisse zusammen und zeigt den Vergleich zwischen der Verlaufsbestimmung eines Schlauches gemäß dem erfindungsgemäßen Verfahren gegenüber den experimentell gewonnenen Daten des realen Schlauches. Die Fig. 3 und Fig. 4 zeigen die dazugehörigen Experimente 1 bis 5 .

Tabelle 1 zeigt für die jeweiligen Experimente, dargestellt in den Fig. 3 und Fig. 4 die Abweichung zwischen den experimentell gemessenen Werten sowie den mit dem erfindungsgemäßen Verfahren bestimmten Verlaufswerten des Schlauches. Aufgeführt sind unterschiedliche Darstellungsformen der Abweichung, zum einen als absolute Abweichung in mm und zum anderen als relative Abweichung in %. Dabei sind weiterhin die jeweilige maximale Abweichung als auch Wurzel der mittleren Quadrate (r.m.s.) Abweichung dargestellt.

Aus den Ergebnissen ist ersichtlich, dass die Darstellung des Verlaufes gemäß dem erfindungsgemäßen Verfahrens hochgradig mit dem physikalisch richtigen Verlauf übereinstimmt.

Tabelle 1

| Exp | Abweichung | | | |
|---|---|---|---|---|
| | absolute (mm) | | relative (%) | |
| | max. | r.m.s. | max. | r.m.s. |
| 1a | 0.002 | 0.001 | 0.003 | 0.002 |
| 1b | 0.03 | 0.02 | 0.02 | 0.01 |
| 1c | 2.32 | 1.25 | 0.74 | 0.40 |
| 2a | 2.30 | 1.07 | 0.78 | 0.36 |
| 2b | 0.99 | 0.54 | 0.44 | 0.24 |
| 2c | 1.78 | 0.93 | 0.92 | 0.48 |
| 3 | 2.68 | 1.45 | 1.48 | 0.80 |
| 4 | 3.79 | 2.30 | 1.50 | 0.89 |
| 5a | 3.14 | 1.50 | 0.56 | 0.27 |
| 5b | 6.52 | 3.13 | 1.23 | 0.59 |

**Patentansprüche**

1. Verfahren zur Verlegung längenerstreckter, flexibler Volumenobjekte, insbesondere Schläuche oder Kabel, während der Konstruktion von dreidimensionalen Objekten, umfassend Gebäude, Maschinen, und Land-, Luft- oder Wasserfahrzeuge, entsprechend einer Verlaufsplanung, wobei die Verlaufsplanung bereitgestellt wird durch ein Verfahren zur im Wesentlichen mit dem physikalisch richtigen Verlauf übereinstimmenden Darstellung der flexiblen, längenerstreckten Volumenobjekte, wobei wiederum ein Bediener in einem mit CAD-Methoden visualisierten, insbesondere auf einem Bildschirm oder in einer 3D-Projektion visualisierten, virtuellen Modell den Verlauf der längenerstreckten, flexiblen Volumenobjekte über Interaktionspunkte interaktiv ändern kann, **dadurch gekennzeichnet, dass**

   - in dem Verfahren die Darstellung in Echtzeit erfolgt, und der Bediener unmittelbar Optimierungen vornehmen kann,
   - das Verfahren 4 Schritte umfasst, Schritt 1 aufweisend die Merkmale
   - dass das jeweilige Volumenobjekt in Abschnitte eingeteilt wird, wobei jeder Abschnitt mit einem Interaktionspunkt beginnt sowie endet und über diesen Punkt mit dem benachbarten Abschnitt verknüpft ist,
   - dass jeder Interaktionspunkt sechs Freiheitsgrade aufweist, wobei diese für einen Befestigungspunkt wahlweise fest vorgegeben sein oder frei definiert sein können,
   - dass die Interaktionspunkte zur virtuellen Verlegung herangezogen werden,
   - dass die Interaktionspunkte fixiert oder in den Freiheitsgraden durch den interaktiven Bediener manipuliert werden können, um die virtuelle Verlegung zu bewirken,
   - Schritt 2 aufweisend die Merkmale
   - dass an Hand realer, längenerstreckter Volumenobjekte mittels Digitalaufnahme und anschließender Computerisierung Positionsdaten-Datensätze bestimmt und bereitgestellt werden, wobei die Positionsdaten-Datensätze das physikalisch richtige Verhalten des längenerstreckten Volumenobjektes in den Abschnitten wiedergeben,
   - wobei die physikalischen Eigenschaften der Abschnitte durch Vermessen dreidimensional gerasterter Positionsdaten eines realen Volumenkörpers, welche die plastischen Eigenschaften wiederspiegeln, erhalten werden, die Eigenschaften bestehend aus
   - der Biegesteifigkeit,
   - der Spannungskraft und
   - der linearen Dichte,
   - Schritt 3 aufweisend die Merkmale
   - dass die Positionsdaten, welche die physikalischen Eigenschaften der Abschnitte wiederspiegeln, unter Berücksichtigung des Torsionsmoments interpoliert werden, wobei
   - eine kontinuierliche Form- und Verlaufsänderung für die Visualisierung und Bedienerinteraktion gewährleistet ist,
   - die Interpolation durch Fitting der experimentellen Positionsdaten mit der Modellfunktion

$$\vec{r}(t) = \sum_i c_i \vec{r_i}(t)$$

durchgeführt wird, wobei

Ci Koeffizienten sind, die durch bedienerdefinierte Manipulation der Interaktionspunkte definiert sind, wobei $r_i(t)$ Teilergebnisse einer linearen Differentialgleichung gemäß der Formel

$$B\vec{r}^{IV} - M\vec{n} \times \vec{r}^{\prime\prime\prime} - T\vec{r}^{\prime\prime} = \mu\vec{g}$$

sind, wobei folgende Bedeutungen gelten:

$B$ - Biegesteifigkeit
$M$ - Torsionsmoment
$\vec{n}$ - Normalenvektor, welcher vom Anfang bis zum Ende des längenerstreckten flexiblen Volumenobjektes zeigt
$T$ - Spannungskraft
$\mu$ - lineare Dichte, oder Masse pro Längeneinheit
$\vec{g}$ - Schwerkraftvektor

Schritt 4 aufweisend die Merkmale,
- dass bei der Manipulation der Interaktionspunkte durch den Bediener die in einer Tabelle abgelegten Positionsdaten für die Abschnitte zwischen den Interaktionspunkten entnommen, entsprechend der Lage der Interaktionspunkte ausgewählt, interpoliert, zusammengefügt und visualisiert werden, wobei weiterhin für das Verfahren gilt,
- dass die interpolierten Werte der Positionsdaten die Position der Mittellinie des längenerstreckten Volumenobjektes angeben,
- dass die zusammengeführten Werte der Einzelabschnitte die Position der Mittellinie des gesamten Objektes ergeben,
- dass der ermittelte Verlauf des längenerstreckten Volumenobjektes mit dem realen Verlauf im Wesentlichen übereinstimmt, insbesondere von dem realen Verlauf nicht mehr als 2% abweicht.

## Claims

1. A method for representing flexible elongate volume objects, in particular hoses or cables, during the design of three-dimensional objects comprising buildings, machinery and agricultural vehicles, aircraft or watercraft, corresponding to flow planning, wherein the flow planning is provided by a method for the representation of the flexible elongate volume objects which substantially agrees with the physically correct flow, wherein a user can in turn interactively change the flow of the elongate flexible volume objects via interaction points in a virtual model visualised using CAD techniques, in particular on a screen or in a 3D projection, **characterized in that**

- the representation in the method takes place in real time and the user is able to make improvements directly,
- the method comprises 4 steps, step 1 involving the features
- that the respective volume object is divided up into sections, wherein each section begins and ends with an interaction point and is connected to the adjacent section by means of this point,
- that each interaction point has six degrees of freedom, wherein these can either be permanently defined or freely defined for an attachment point,
- that the interaction points are used for the virtual representation,
- that the interaction points can be fixed or manipulated in the degrees of freedom by the interactive user, in order to bring about the virtual representation,
- step 2 exhibiting the features
- that with the help of genuine elongate volume objects by means of digital recording and subsequent computerization, positional data records can be established and supplied, wherein the positional data records reproduce the physically correct behaviour of the elongate volume object in the sections,
- wherein the physical properties of the sections are obtained by measuring three-dimensionally rasterized positional data of a genuine volume body which reflect the plastic properties, the properties comprising
- flexural rigidity,
- tension force and
- linear density,
- step 3 comprising the features
- that the positional data which reflect the physical properties of the sections are interpolated taking account of the torsional moment, wherein
- a continuous shape and profile change for visualization and user interaction is guaranteed,
- the interpolation is carried out by fitting the experimental positional data with the model function

$$\vec{r}(t) = \sum_i c_i \vec{r}_i(t)$$

wherein
Ci are coefficients which are defined by user-defined manipulation of the interaction points
wherein n(t) are partial results of a linear differential equation according to the formula

$$B\vec{r}^{IV} - M\vec{n} \times \vec{r}''' - T\vec{r}'' = \mu\vec{g}$$

wherein

    B flexural rigidity
    M torsional moment
    n normal vector from the start to the end of the elongate flexible volume object
    T tensional force
    μ linear density or mass per length unit g gravity vector

step 4 exhibiting the features
- that during manipulation of the interaction points by the user, the positional data recorded in a table for the sections between the interaction points are removed, selected according to the position of the interaction points, interpolated, assembled and visualized, wherein it is furthermore true of the method,
- that the interpolated values of the positional data indicate the position of the centre line of the elongate volume object,
- that the compiled values of the individual sections produce the position of the centre line of the entire object,
- that the determined flow of the elongate volume object substantially coincides with the actual flow, in particular it deviates from the actual flow by no more than 2%.

**Revendications**

1. Procédé pour la pose d'objets volumiques allongés, flexibles, en particulier de tuyaux ou câbles, pendant la construction d'objets tridimensionnels comprenant des bâtiments, machines et des véhicules terrestres, aéronefs ou bateaux, selon une planification du parcours, dans lequel la planification du parcours est mise à disposition par un procédé pour la représentation sensiblement en concordance avec le parcours physiquement correct des objets volumiques allongés, flexibles, dans lequel d'autre part, dans un modèle virtuel visualisé avec des méthodes CAO, en particulier sur un écran ou visualisé dans une projection 3D, un opérateur peut modifier interactivement le parcours des objets volumiques allongés, flexibles, via des points d'interaction, **caractérisé en ce que**

    - dans le procédé, la représentation s'effectue en temps réel et l'opérateur peut directement procéder à des optimisations,
    - le procédé comprend 4 étapes, l'étape 1 présentant les caractéristiques **en ce**

- **que** l'objet volumique respectif est divisé en sections, dans lequel chaque section commence et se termine avec un point d'interaction et est liée via ce point à la section voisine,
- que chaque point d'interaction présente six degrés de liberté, dans lequel ceux-ci peuvent être prédéfinis de façon fixe ou définis librement au choix pour un point de fixation,
- que les points d'interaction sont pris en compte pour la pose virtuelle,
- que les points d'interaction peuvent être fixés ou être manipulés concernant les degrés de liberté par l'opérateur interactif pour produire la pose virtuelle,
- l'étape 2 présentant les caractéristiques **en ce**
- **qu'**à l'aide d'objets volumiques allongés réels, des jeux de données de données de position sont déterminés et mis à disposition par enregistrement numérique et informatisation qui s'en suit, dans lequel les jeux de données de données de position restituent le comportement physiquement correct de l'objet volumique allongé dans les sections,
- dans lequel les propriétés physiques des sections sont obtenues par mesure de données de position tramées tridimensionnelles d'un corps volumique réel, lesquelles reflètent des propriétés plastiques, les propriétés se composant de
- la résistance à la flexion,
- la force de tension et
- la masse linéique,
- l'étape 3 présentant les caractéristiques **en ce**
- **que** les données de position, lesquelles reflètent les propriétés physiques des sections, sont interpolées en tenant compte du moment de torsion, dans lequel
- une variation continue de la forme et du parcours est garantie pour la visualisation et l'interaction de l'opérateur,
- l'interpolation est réalisée par adaptation des données de position expérimentales à la fonction modèle

$$\vec{r}(t) = \sum_i c_i \vec{r_i}(t)$$

dans lequel $C_i$ sont des coefficients définis par manipulation définie par l'opérateur des points d'interaction, dans lequel n(t) sont des résultats partiels d'une équation différentielle linéaire selon la formule

$$B\vec{r}^{IV} - M\vec{n} \times \vec{r}''' - T\vec{r}'' = \mu\vec{g}$$

dans lequel les significations suivantes s'appliquent :

$B$ - résistance à la flexion
$M$ - moment de torsion
$\vec{n}$ - vecteur normal, lequel indique du début à la fin de l'objet volumique allongé flexible
$T$ - force de tension
$\mu$ - masse linéique ou masse par unité de longueur
$\vec{g}$ - vecteur de gravité

l'étape 4 présentant les caractéristique **en ce**
- **que**, lors de la manipulation des points d'interaction par l'opérateur, les données de position déposées dans un tableau pour les sections entre les points d'interaction sont consultées, sélectionnées en fonction de la position des points d'interactions, interpolées, réunies et visualisées, dans lequel, pour le procédé, il s'applique en outre
- que les valeurs interpolées des données de position indiquent la ligne médiane de l'objet volumique allongé,
- que les valeurs réunies des sections individuelles donnent la position de la ligne médiane de l'objet global,
- que le parcours déterminé de l'objet volumique allongé coïncide sensiblement avec le parcours réel, et ne diverge en particulier pas plus de 2% du parcours réel.

Fig. I

1

Fig. 2.:

1

2

Fig. 3

1a

2a

1

1

1b

2b

1

1

1c

2c

1

1

Fig.4

3

5a

1

1

g

4

5b

1

1

1

g

Fig. 5

Fig. 6

Fig 7

Fig. 8

Fig. 9

Fig. 10

Fig. 11

Fig. 12

Fig. 13

Fig. 14

Fig. 15

Fig. 16

Fig. 17

REL. RMS. DEV. (%)

G-factor (1/m3)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **NG, F. M. et al.** Designing cable harness assemblies in virtual environments. *Journal of Materials Processing Technology,* 22. November 2000, vol. 107 (1-3), 37-43
- **HERGENROTHER et al.** Real-time virtual cables based on kinematic simulation. *8th international conference in central europe on computer graphics, visualisation and interactive, digital media,* 2000

- Eurographics and IFIP WG 5. 10. WSCG'2000. *Conference,* 2000, vol. 2, 402-409
- Modelling flexible parts for virtual reality assembly simulations which interact with their environment. **NACH LEON et al.** shape modelling and applications, SMI 2001 international conference. IEEE, 07. Mai 2001, 335-344